Europäisches Patentamt

European Patent Office

Office européen des brevets

(19)

(11) Veröffentlichungsnummer: **0 423 652 A2**

(12) **EUROPÄISCHE PATENTANMELDUNG**

(21) Anmeldenummer: **90119632.9**

(22) Anmeldetag: **12.10.90**

(51) Int. Cl.⁵: **H04N 5/91**

(30) Priorität: **17.10.89 DE 3934635**

(43) Veröffentlichungstag der Anmeldung:
**24.04.91 Patentblatt 91/17**

(84) Benannte Vertragsstaaten:
**BE FR GB IT LU NL**

(71) Anmelder: **VARIOVISION
KOMMUNIKATIONS-SYSTEME GmbH
Paosostrasse 7
W-8000 München 60(DE)**

(72) Erfinder: **Pannier, Peter
Hubertusstrasse 3
W-8082 Grafrath(DE)**

(74) Vertreter: **Kinne, Reinhard, Dipl.-Ing. et al
Patentanwaltsbüro
Tiedtke-Bühling-Kinne-Grupe-Pellmann-Gra-
ms-Struif Bavariaring 4
W-8000 München 2(DE)**

(54) Videogerät für zwei Fernsehprogrammquellen.

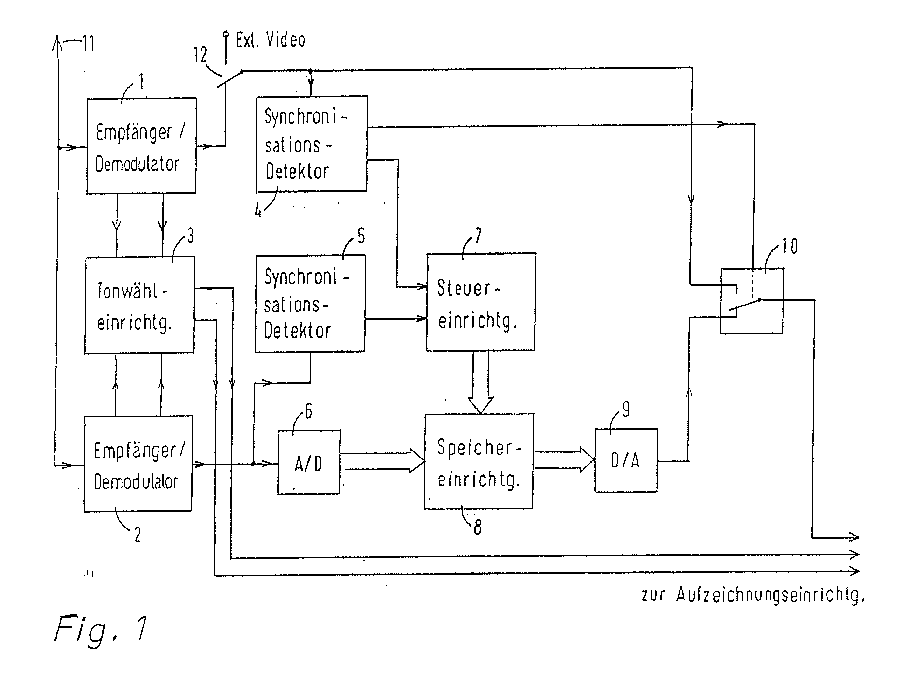

(57) Videogerät zur Aufzeichnung einer ersten und einer zweiten Fernsehprogrammquelle auf einem Aufzeichnungsmedium, mit einer Aufzeichnungseinrichtung zur Aufzeichnung einer Fernsehprogrammquelle auf einem Aufzeichnungsmedium und mit einer Aufnahmevorrichtung, die der Aufzeichnungseinrichtung alternierend ein Halbbild der ersten und ein Halbbild der zweiten Fernsehprogrammquelle und kontinuierlich einen Tonkanal jeder Fernsehpro- grammquelle zuführt (Fig. 1).

*Fig. 1*

## VIDEOGERÄT FÜR ZWEI FERNSEHPROGRAMMQUELLEN

Die Erfindung bezieht sich auf Videogeräte gemäß den Oberbegriffen der Ansprüche 1 und 9.

Aus psychooptischen Untersuchungen ist bekannt, daß das menschliche Auge gegenüber vertikalen Auflösungsverlusten wesentlich unempfindlicher ist, als gegenüber horizontalen Auflösungsverlusten.

Des weiteren sind Videogeräte bekannt, die auf Magnetbändern eine Fernsehprogrammquelle d. h. eine Bildquelle und mehrere Tonkanäle aufzeichnen und wiedergeben können. Derartige Videogeräte arbeiten je nach TV-Standard mit 50 oder 60 Halbbildern pro Sekunde und weisen eine eigene Empfangs- und Demodulationseinrichtung auf, um Fernsehprogrammsendungen auch dann aufzeichnen zu können, wenn kein Fernsehempfänger bzw. dessen Empfangs- und Demodulationseinrichtung zur Verfügung steht. Bei der Wiedergabe werden das Bild- und Tonsignal in der zugrundeliegenden TV-Norm, d. h. also wiederum mit 50 oder 60 Halbbildern pro Sekunde, einem Fernsehgerät oder Monitor zugeführt.

Durch die steigende Anzahl von Fernsehprogrammen ist es häufig wünschenswert, zwei gleichzeitig gesendete Programme parallel aufzuzeichnen. Die bisherigen Videogeräte sind dazu jedoch nicht in der Lage.

Der Erfindung liegt die Aufgabe zugrunde, ein Videogerät gemäß dem Oberbegriff des Anspruchs 1 derart weiterzubilden, daß ohne wesentliche Bildqualitätsverluste zwei Fernsehprogrammquellen auf einem Aufzeichnungsmedium˙ gleichzeitig aufgezeichnet werden können.

Des weiteren liegt der Erfindung die Aufgabe zugrunde, ein Videogerät gemäß dem Oberbegriff des Anspruchs 9 derart weiterzubilden, daß zwei mit einem Videogerät nach Anspruch 1 aufgezeichnete Fernsehprogrammquellen einzeln ohne Bildqualitätsverluste wiedergegeben werden können.

Diese Aufgaben werden durch die kennzeichnenden Merkmale der Ansprüche 1 bzw. 9 gelöst.

Mit dem Videogerät nach Anspruch 1 können zwei Fernsehprogrammquellen gleichzeitig aufgenommen werden, ohne daß zwei Videogeräte oder zwei Aufzeichnungsmedien erforderlich werden.

Des weiteren wird für die Aufzeichnung zweier· Fernsehprogrammquellen nicht mehr Aufzeichnungsmaterial benötigt, wie bisher für die Aufzeichnung einer Fernsehprogrammquelle.

Mit dem Videogerät nach Anspruch 9 kann wahlweise einer der beiden Fernsehprogrammquellen wiedergegeben werden.

Durch die Merkmale der Ansprüche 17 oder 18 können des weiteren beide Fernsehprogrammquellen gleichzeitig auf verschiedenen Monitoren oder Fernsehgeräten wiedergegeben werden.

Des weiteren sind mit den Videogeräten nach Anspruch 1 und 9 weiterhin Aufnahmen und Wiedergaben im Standardvideoverfahren möglich.

Die Erfindung macht von der Erkenntnis Gebrauch, daß das Auge gegen vertikale Auflösungsverluste relativ unempfindlich ist. Der Betrachter eines Fernsehbildes, das aus zwei aufeinanderfolgenden Halbbildern mit insgesamt 625 Zeilen besteht, wobei ein Halbbild die ungeraden Zeilen und ein Halbbild die geraden Zeilen bildet, kann daher keinen horizontalen Auflösungsverlust feststellen, wenn das Fernsehbild aus zwei gleichen Halbbildern gebildet wird.

Werden mit dem Videogerät nach Anspruch 1 zwei Spielfilme aufgezeichnet, die bereits mit 25 Bildern pro Sekunde hergestellt werden, so sind bei der Wiedergabe dieser Aufzeichnung mit einem Videogerät nach Anspruch 9 praktisch keine Qualitätseinbußen feststellbar.

Bei Aufzeichnungen, die mit einer Videokamera hergestellt wurden, reduziert sich die Bildqualität der Aufzeichnung lediglich auf die Bildqualität eines Spielfilms.

In den übrigen Unteransprüchen sind weitere vorteilhafte Weiterbildungen der Erfindung angegeben.

Die Erfindung wird nachstehend anhand eines Ausführungsbeispiels unter Bezugnahme auf die Zeichnung näher erläutert. Es zeigt:

Fig. 1 ein Blockschaltbild einer Aufnahmevorrichtung gemäß einem ersten Ausführungsbeispiel des erfindungsgemäßen Videogerätes;

Fig. 2 ein Blockschaltbild einer Wiedergabevorrichtung gemäß einem ersten Ausführungsbeispiel des erfindungsgemäßen Videogerätes;

Fig. 3 ein Bildsignalabfolgediagramm für die Aufnahme-und Wiedergabevorrichtung gemäß Fig. 1 und 2.

Fig. 1 zeigt ein Blockschaltbild einer Aufnahmevorrichtung für ein erfindungsgemäßes Videogerät. Der Antennenanschluß 11 der Empfänger/Demodulator 1, der Anschluß für externe Videoquellen, wie z. B. eine Videokamera, der Umschalter 12 sowie die nachfolgend nicht gezeigte Aufzeichnungseinrichtung entsprechen dem Aufbau eines Videogerätes gemäß dem Stand der Technik. Für das erfindungsgemäße Aufnahmeverfahren zur Aufnahme zweier Videokanäle auf ein Band, von denen jeder eine Bild- und eine Mono- oder Stereotonquelle aufweisen, wird darüber hinaus noch ein Empfänger/Demodulator 2, ein Halbbildspeicher 6, 8, 9, zwei Synchronisationsdetektoren 4, 6, eine Umschalteinrichtung 10, eine Steuereinrichtung 7, und eine Tonwähleinrichtung 3 benötigt. Der Halbbildspeicher ist aus einem A/D-Wandler 6, einem D/A-Wandler 9 sowie einer Digitalspeichereinrichtung 8 aufgebaut.

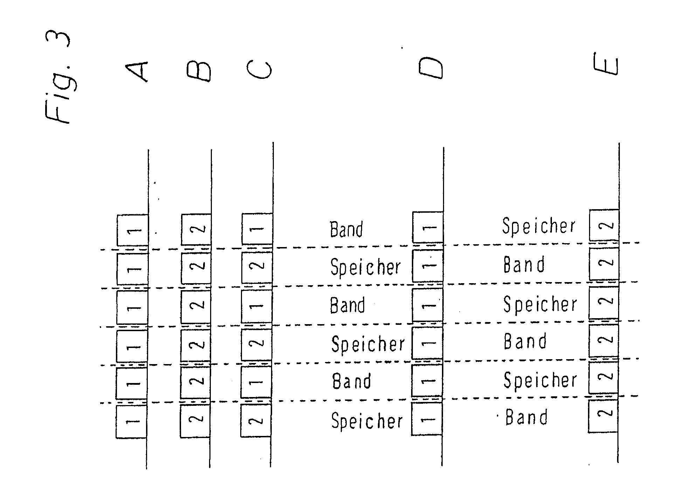

Die Eingänge der Empfänger/Demodulatoren 1, 2, die einzeln abstimmbar sind, sind mit demselben Antennenanschluß 11 verbunden. An ihren Ausgängen entstehen Signale, wie sie in Fig. 3A und 3B gezeigt sind. Diese Signale weisen 50 oder 60 Halbbilder pro Sekunde auf. In jeder vertikalen Austastlücke zwischen zwei Halbbildern erfolgt ein Vertikalimpuls, und während eines Halbbildes erfolgen je nach TV-Standard eine Vielzahl von Zeilensynchronimpulsen. Die Vertikalimpulse und die Zeilensynchronimpulse sind in Fig. 3 nicht dargestellt.

Das Signal nach Fig. 3A wird dem Synchronisationsdetektor 4 und der Umschalteinrichtung 10, das Signal nach Fig. 3B dem Synchronisationsdetektor 5 und dem A/D-Wandler 6 des Halbbildspeichers zugeführt.

Die Synchronisationsdetektoren 4, 5 geben die Vertikal-und Zeilensynchronimpulse der beiden Fernsehprogrammquellen an die Steuereinrichtung 7 des Halbbildspeichers 6, 8, 9 weiter. Von dem Synchronisationsdetektor 4 werden des weiteren die Halbbildkennimpulse der ersten Fernsehprogrammquelle an die Umschalteinrichtung 10 weitergegeben.

Die Speichereinrichtung 6, 8, 9 kann ein komplettes Halbbild speichern. Das analoge Halbbild wird von der Speichereinrichtung 6, 8, 9 mittels des Analog/Digital-Wandlers 6 analog/digital gewandelt, und nach der Speichereinrichtung 8 mittels des Digital/Analog-Wandlers 9 wieder digital/analog gewandelt.

Die Steuereinrichtung 7 führt der Speichereinrichtung 8 nach jedem Vertikalimpuls im Signal nach Fig. 3B Schreibimpulse entsprechend der Zeilensynchronimpulse im Signal nach Fig. 3B und nach jedem Vertikalimpuls nach Fig. 3A Lese- bzw. Ausgabeimpulse entsprechend der Zeilensynchronimpulse im Signal nach Fig. 3A zu. Dadurch wird jedes zweite Halbbild des zweiten Videokanals im Halbbildspei cher 6, 8, 9 gespeichert und gleichzeitig mit jedem Halbbild der ersten Fernsehprogrammquelle an die Umschalteinrichtung 10 weitergegeben.

Die Umschalteinrichtung 10 wird mittels der Vertikalimpulse der ersten Fernsehprogrammquelle derart gesteuert. daß sie in das Signal nach Fig. 3B anstelle jedes zweiten Halbbildes der ersten Fernsehprogrammquelle ein Halbbild der zweiten Fernsehprogrammquelle einsetzt. Dadurch ergibt sich am Ausgang der Umschalteinrichtung 10 der Signalverlauf nach Fig. 3C. Dieses Signal, das dieselben Vertikal-und Zeilensynchronimpule aufweist, wie das Signal nach Fig. 3A oder 3B, wird an die Aufzeichnungseinrichtung des Videogerätes weitergegeben und aufgezeichnet. Um Potentialsprünge in dem zusammengesetzten Signal zu vermeiden, kann die Umschalteinrichtung 10 mit Klemmstufen für jeden Eingangskanal ausgestattet sein. Will der Benutzer des Videogerätes nur eine Fernsehprogrammquelle aufzeichnen, so kann die Umschalteinrichtung 10 ständig in der oberen Position nach Fig. 1 gehalten werden.

Der Tonwähleinrichtung 3 wird von dem Empfänger/Demodulator 1, 2 das jeweilige Tonsignal der Fernsehbildquelle 1 und 2 zugeführt, das jeweils aus zwei Kanälen besteht. Bei Standardaufzeichnung, also bei Aufzeichnung nur einer einzigen Fernsehprogrammquelle werden die Tonkanäle der ersten Fernsehprogrammquelle mittels der Tonwahleinrichtung 3 an die nachfolgende Aufzeichnungseinrichtung weitergegeben. Bei Aufzeichnung zweier Fernsehprogrammquellen wird von den Tonkanälen der beiden Fernsehprogrammquellen mittels der Tonwähleinrichtung 3 nur jeweils ein Tonkanal einer Fernsehprogrammquelle auf die nachfolgende Aufzeichnungseinrichtung durchgeschaltet. Der Benutzer des Videogerätes kann mittels einer nicht gezeigten Eingabeeinrichtung die Tonwähleinrichtung 3 derart einstellen, daß diese die gewünschten Tonkanäle weitergibt.

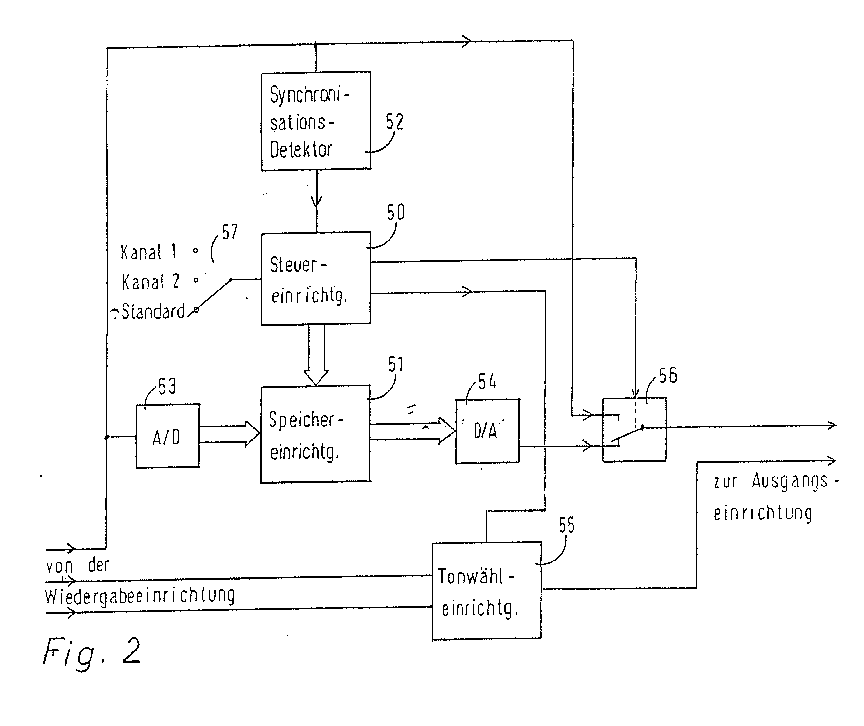

Fig. 2 zeigt ein Blockschaltbild einer Wiedergabevorrichtung für ein erfindungsgemäßes Videogerät. Der Wiedergabevorrichtung wird das Bildsignal gemäß Fig. 3C zugeführt und an die Eingänge eines A/D-Wandlers 53 und eines Synchronisationsdetektors 52 sowie an einen ersten Eingang der Umschalteinrichtung 56 angelegt. Des weiteren wird das aus zwei Kanälen bestehende Tonsignal an die Tonwähleinrichtung 55 angelegt.

Der Halbbildspeicher 51. 53, 54 der wiedergabevorrichtung ist wie der Halbbildspeicher 6, 8, 9 der Aufnahmevorrichtung aufgebaut, d. h. daß die zu speichernden Halbbilder analog/digital/analog gewandelt werden und der Digitalspeicher mindestens die einem Halbbild entsprechende Kapazität hat.

Das Signal nach Fig. 3C beinhaltet wiederum nicht gezeigte Vertikal- und Zeilensynchronimpulse wie die Signale der Fig. 3A und 3B. Der Synchronisationsdetektor 52 führt die Vertikal- und Zeilensynchronimpulse der Steuereinrichtung 50 zu.

Mittels einer Wähleinrichtung 57 kann der Benutzer einstellen, ob eine erste oder zweite mit einer Aufnahmevorrichtung gemäß Fig. 1 aufgezeichnete oder eine mit einem Standardverfahren aufgezeichnete Fernsehprogrammquelle wiedergegeben werden soll. Die Wähleinrichtung 57 stellt die Steuereinrichtung 50 entsprechend der gewünschten Betriebsart ein. Soll eine Standardwiedergabe ausgeführt werden, so steuert die Steuereinrichtung 50 die Umschalteinrichtung 56 derart an, daß der Umschalter ständig in der oberen Position nach Fig. 2 gehalten wird.

Bei Wiedergabe einer mittels einer Aufzeichnungsvorrichtung gemäß Fig. 1 aufgezeichneten Fernsehprogrammquelle steuert die Steuereinrichtung 50 die Speichereinrichtung 51 entsprechend der Vertikal- und Zeilensynchronisiersignale des Signals nach Fig. 3C derart, daß aus dem Signal nach Fig. 3C jedes zweite Halbbild gespeichert wird. Da sich die Halbbilder des ersten und zweiten Kanals abwechseln, werden daher entsprechend der Einstellung der Wähleinrichtung 57 entweder alle aufgezeichneten Halbbilder der ersten oder zweiten Fernsehprogrammquelle gespeichert, wobei in der erfindungsgemäßen Vorrichtung die Halbbilder der wiederzugebenden Fernsehprogrammquelle gespeichert werden. Der Halbbildspeicher 51, 53, 54 wird entsprechend der Vertikal- und Zeilensynchronisiersignale des Signals nach Fig. 3C dann ausgelesen. d.h. das gespeicherte Halbbild der wiederzugebenden Fernsehprogrammquelle wird dann an den zweiten Eingang der Umschalteinrichtung 56 angelegt, wenn das Halbbild der nicht wiederzugebenden Fernsehprogrammquelle am ersten Eingang der Umschalteinrichtung 56 anliegt.

Dabei wird die Umschalteinrichtung 56 durch die Steuereinrichtung 50 nach Maßgabe der Vertikalimpulse derart gesteuert, daß sie die Halbbilder der wiederzugebenden Fernsehprogrammquelle zuerst entsprechend der vorgeschalteten Wiedergabeeinrichtung und dann dasselbe Halbbild nocheinmal wie es von der Wiedergabeeinrichtung kommend in dem Halbbildspeicher 51, 53, 54 gespeichert wurde, durchschaltet. Somit entsteht am Ausgang der Umschalteinrichtung 56 eine Folge von Halbbildern gemäß Fig. 3D oder Fig. 3E, die 50 oder 60 Halbbilder pro Sekunde aufweist, wobei jeweils zwei aufeinanderfolgende Halbbilder gleich sind.

Das Ausgangssignal der Umschalteinrichtung 50 gemäß Fig. 3D oder 3E und das Ausgangssignal der Tonwähleinrichtung 55 werden einer Ausgangseinrichtung, wie z. B. einer Impedanzwandlerschaltung oder einer Ausgangsbuchse zugeführt. Die Tonwähleinrichtung 55 wird von der Steuereinrichtung 50 derart gesteuert, daß sie bei einer Standardwiedergabe beide Tonkanäle und bei einer Wiedergabe mittels der erfindungsgemäßen Wiedergabevorrichtung den zu der wiedergegebenen Fernsehprogrammquelle gehörigen Tonkanal durchschaltet.

Die erfindungsgemäße Aufnahmevorrichtung und die erfindungsgemäße Wiedergabevorrichtung kann bei einem Videorecorder, einem Bildplattenspieler oder einem anderem Videogerät zur Videoaufzeichnung bzw. Videowiedergabe Anwendung finden, wenn dieses Gerät zwei Tonkanäle für Stereotonwiedergabe bei Standardbetrieb hat. Des weiteren können bei Videogeräten, die mehrere Tonkanäle aufzeichnen und/oder wiedergeben können, selbstverständlich mehrere Tonkanäle jeder Fernsehbildquelle aufgezeichnet werden.

Wird die erfindungsgemäße Aufzeichnungsvorrichtung und die erfindungsgemäße Wiedergabevorrichtung in einem Videogerät angeordnet, so kann bei geeigneter Verschaltung der einzelnen Komponenten der Halbbildspeicher, die Umschalteinrichtung, die Tonwähleinrichtung und die Synchronisationsdetektoren sowohl für die erfindungsgemäße Aufnahmevorrichtung als auch für die erfindungsgemäße Wiedergabevorrichtung verwendet werden.

Gemäß einem zweiten Ausführungsbeispiel der Erfindung könnten die beiden gleichzeitig aufgezeichneten Fernsehprogrammquellen auch gleichzeitig auf zwei verschiedenen Monitoren oder zwei verschiedenen Monitorgruppen (Hotel-TV) wiedergegeben werden. Dazu müßte die Speichereinrichtung der Wiedergabevorrichtung derart gesteuert werden, daß sie aufeinanderfolgend die Halbbilder beider Videokanäle speichert und die Umschalteinrichtung mit zwei Wechselschaltern ausgestattet ist. Bei sinkenden Kosten für Halbleiterspeicher könnte zu diesem Zweck das Videogerät gemäß des zweiten Ausführungsbeispiels auch zwei erfindungsgemäße Wiedergabevorrichtungen gemäß Fig. 2 aufweisen.

Des weiteren könnte bei diesem zweiten Ausführungsbeispiel die Umschalteinrichtung oder die gesamte Wiedergabevorrichtung auch in die Monitore verlagert werden. In diesem Fall könnte z. B. beim Hotel-TV die Wahl zwischen den beiden Videokanälen auch erst am Monitor vorgenommen werden.

Gemäß einem dritten Ausführungsbeispiel könnte die erfindungsgemäße Aufnahmevorrichtung und die erfindungsgemäße Wiedergabevorrichtung auch bei einer Fernsehübertragung zwischen dem Sender und Empfänger eingesetzt werden. Dabei müßte der Sender nach dem in Fig. 1 dargestellten Prinzip und der Empfänger nach dem in Fig. 2 dargestellten Prinzip arbeiten. Bei Satellitenübertragungen könnte der Übertragungsaufwand und die Übertragungskosten dann entsprechend reduziert werden.

Videogerät zur Aufzeichnung einer ersten und einer zweiten Fernsehprogrammquelle auf einem Aufzeichnungsmedium, mit einer Aufzeichnungseinrichtung zur Aufzeichnung einer Fernsehprogrammquelle auf einem Aufzeichnungsmedium und mit einer Aufnahmevorrichtung, die der Aufzeichnungseinrichtung alternierend ein Halbbild der ersten und ein Halbbild der zweiten Fernsehprogrammquelle und kontinuierlich einen Tonkanal jeder Fernsehprogrammquelle zuführt (Fig. 1).

**Ansprüche**

1. Videogerät zur Aufzeichnung einer ersten und einer zweiten Fernsehprogrammquelle auf einem Aufzeichnungsmedium, mit einer Aufzeichnungseinrichtung zur Aufzeichnung einer Fernsehprogrammquelle auf einem Aufzeichnungsmedium, gekennzeichnet durch
eine Aufnahmevorrichtung, die der Aufzeichnungseinrichtung alternierend ein Halbbild der ersten und ein Halbbild der zweiten Fernsehprogrammquelle und kontinuierlich einen Tonkanal jeder Fernsehprogrammquelle zuführt.

2. Videogerät nach Anspruch 1, mit einer ersten Empfangs- und Demodulationseinrichtung (1), gekennzeichnet durch
eine zweite Empfangs- und Demodulationseinrichtung (2).

3. Videogerät nach Anspruch 1 oder 2,
dadurch gekennzeichnet, daß
die Aufnahmevorrichtung einen Halbbildspeicher (6, 8, 9), eine Umschalteinrichtung (10), die der Aufzeichnungsein richtung alternierend ein Halbbild der ersten Fernsehprogrammquelle und ein in dem Halbbildspeicher gespeichertes Halbbild der zweiten Fernsehprogrammquelle zuführt und eine Steuereinrichtung (7) umfaßt, die den Halbbildspeicher derart steuert, daß dieser jedes zweite Halbbild der zweiten Fernsehprogrammquelle speichert und diese Halbbilder zeitgleich mit den zweiten Halbbildern der ersten Fernsehprogrammquelle an die Umschalteinrichtung ausgibt.

4. Videogerät nach Anspruch 3,
dadurch gekennzeichnet, daß
ein erster Synchronisationsdetektor (4) die Vertikalimpulse der ersten Fernsehprogrammquelle als Umschaltsignal an die Umschalteinrichtung und die Vertikalimpulse und die Zeilensynchronimpulse der ersten Fernsehprogrammquelle zur Bildung von Lese- bzw. Ausgabesignale an die Steuereinrichtung weitergibt, und daß ein zweiter Synchronisationsdetektor (5) die Vertikalimpulse und die Zeilensynchronimpulse der zweiten Fernsehprogrammquelle zur Bildung von Schreibimpulsen an die Steuereinrichtung weitergibt.

5. Videogerät nach Anspruch 3 oder 4,
dadurch gekennzeichnet, daß
der Halbbildspeicher ein Digitalspeicher ist, der an seinem Eingang einen Analog/Digital-Wandler (6) und an seinem Ausgang einen Digital/Analog-Wandler (9) hat.

6. Videogerät nach einem der vorherigen Ansprüche, dadurch gekennzeichnet, daß
eine Tonwähleinrichtung (3) einen Tonkanal jeder Fernsehprogrammquelle oder beide Tonkanäle einer Fernsehprogrammquelle an die Aufzeichnungseinrichtung weitergibt.

7. Videogerät nach Anspruch 6,
dadurch gekennzeichnet, daß
die Tonwähleinrichtung durch eine Eingabeeinrichtung eingestellt wird.

8. Videogerät nach Anspruch 2, 3, 4, 5, 6 oder 7,
dadurch gekennzeichnet, daß
die Umschalteinrichtung in einer festen Position gehalten werden kann, so daß Standardvideoaufzeichnungen ebenfalls möglich sind.

9. Videogerät zur Wiedergabe einer ersten und zweiten Fernsehprogrammquelle, deren Halbbilder alternierend und deren Tonkanäle kontinuierlich auf einem Aufzeichnungsmedium aufgezeichnet sind, mit einer Wiedergabeeinrichtung zur Abnahme der Bild- und Toninformation von dem Aufzeichnungsmedium und einer Ausgangseinrichtung, gekennzeichnet durch eine Wiedergabevorrichtung, die der Ausgangseinrichtung jedes Halbbild des wiederzugebenden Kanals zweimal aufeinanderfolgend zusammen mit dem Tonkanal des wiederzugebenden Kanals zuführt.

10. Videogerät nach Anspruch 9,
dadurch gekennzeichnet, daß
die Wiedergabevorrichtung einen Halbbildspeicher (51, 53, 54),
eine Umschalteinrichtung (56), die der Ausgangseinrichtung alternierend ein Halbbild der wiederzugebenden Fernsehprogrammquelle aus der Wiedereingabeeinrichtung und dasselbe Halbbild darauffolgend aus dem Halbbildspeicher zuführt und
eine Steuereinrichtung (50) umfaßt, die den Halbbildspeicher derart steuert, daß dieser jedes Halbbild der wiederzugebenden Fernsehbildquelle speichert und diese Halbbil der zeitgleich mit den Halbbildern der nicht wiederzugebenden Fernsehprogrammquelle an die Umschalteinrichtung ausgibt.

11. Videogerät nach Anspruch 10,
dadurch gekennzeichnet, daß
ein Synchronisationsdetektor (52) die Vertikalimpulse und Zeilensynchronimpulse der wiederzugebenden und nicht wiederzugebenden Fernsehprogrammquelle zur Bildung von Schreibsignalen und Lese- bzw. Ausgabesignalen an die Steuereinrichtung weitergibt.

12. Videogerät nach Anspruch 10 oder 11,
dadurch gekennzeichnet, daß
der Halbbildspeicher ein Digitalspeicher (51) ist, der an seinem Eingang einen Analog/Digital-Wandler (53) und an seinem Ausgang einen Digital/Analog-Wandler (54) hat.

13. Videogerät nach Anspruch 10, 11 oder 12,
dadurch gekennzeichnet, daß
mittels einer Wähleinrichtung (57) die Steuereinrichtung so eingestellt wird, daß entweder die erste oder zweite Fernsehprogrammquelle oder eine Standardvideoaufzeichnung wiedergegeben wird.

14. Videogerät nach Anspruch 10, 11, 12 oder 13,
dadurch gekennzeichnet, daß
die Steuereinrichtung der Umschalteinrichtung bei Wiedergabe einer der beiden Fernsehprogrammquellen im Halbbildrhythmus ein Umschaltsignal und bei einer Standardwiedergabe ein konstantes Signal zuführt, durch das die Umschalteinrichtung der Ausgangseinrichtung ständig ein Standardvideosignal von der Wiedergabeeinrichtung zuführt.

15. Videogerät nach Anspruch 10, 11, 12, 13 oder 14,
dadurch gekennzeichnet, daß
die Steuereinrichtung eine Tonwähleinrichtung (55) derart einstellt, daß diese den Tonkanal der wiederzugebenden Fernsehprogrammquelle von der Wiedergabeeinrichtung an die Ausgangseinrichtung weitergibt.

16. Videogerät nach Anspruch 10, 11, 12, 13, 14 oder 15,
dadurch gekennzeichnet, daß
die Steuereinrichtung die Tonwähleinrichtung bei Standardvideowiedergabe derart einstellt, daß diese beide Tonkanäle von der Wiedergabeeinrichtung an die Ausgangseinrichtung weitergibt.

17. Videogerät nach Anspruch 9,
dadurch gekennzeichnet, daß
mittels einer zweiten Umschalteinrichtung beide Fernsehprogrammquellen an die Ausgabeeinrichtung weitergegeben werden können.

18. Videogerät nach Anspruch 9,
dadurch gekennzeichnet, daß
mittels einer zweiten Wiedergabevorrichtung beide Fernsehprogrammquellen an die Ausgabeeinrichtung weitergegeben werden können.

19. Videogerät nach Anspruch 9, 10, 11, 12, 13, 14, 15, 16, 17 oder 18,
dadurch gekennzeichnet, daß
die Ausgabeeinrichtung ein Impedanzwandler oder eine Ausgangsbuchse ist.

20. Videogerät nach einem der vorherigen Ansprüche, gekennzeichnet durch
eine Aufnahmevorrichtung und
eine Wiedergabevorrichtung.

Empfänger / Demodulator 1

Synchronisations-Detektor 4

Ext. Video

12

11

Tonwähl-einrichtg. 3

Synchronisations-Detektor 5

Steuer-einrichtg. 7

10

Empfänger / Demodulator 2

A/D 6

Speicher-einrichtg. 8

D/A 9

zur Aufzeichnungseinrichtg.

Fig. 1

Fig. 2

Fig. 3

A

B

C

Speicher

Band

Speicher

Band

Speicher

Band

D

Band

Speicher

Band

Speicher

Band

Speicher

E